(19) Europäisches Patentamt
European Patent Office
Office européen des brevets

(11) **EP 4 593 314 A1**

(12) **EUROPEAN PATENT APPLICATION**
published in accordance with Art. 153(4) EPC

(43) Date of publication:
**30.07.2025 Bulletin 2025/31**

(51) International Patent Classification (IPC):
*H04L 5/00* (2006.01)

(21) Application number: **23862318.5**

(22) Date of filing: **04.09.2023**

(52) Cooperative Patent Classification (CPC):
**H04L 1/00; H04L 5/00; H04W 28/26; H04W 72/12; H04W 72/232**

(86) International application number:
**PCT/CN2023/116660**

(87) International publication number:
**WO 2024/051624 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.09.2022 CN 202211100731**

(71) Applicant: **Apogee Networks, LLC**
**Dallas, TX 75201 (US)**

(72) Inventors:
• **WU, Lu**
  **Shanghai 201206 (CN)**
• **ZHANG, Xiaobo**
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD USED IN NODE FOR WIRELESS COMMUNICATION, AND APPARATUS**

(57) Disclosed in the present application is a method and an apparatus used in a wireless communication node. A first node receives first signaling, which is used to indicate a first RE set, and sends a first code block set and a first bit block in only a target RE subset within the first RE set. The first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer; the first target integer is the number of coded modulation symbols per layer used for transmitting the first bit block in the target RE subset, and the first target integer is not greater than the first integer and not greater than the second integer.

FIG. 1

**Description**

**Technical Field**

The present application relates to a transmission method and an apparatus in wireless communication systems, in particular a wireless signal transmission method and an apparatus in a wireless communication system that supports cellular networks.

**Background Art**

In the 5G system, in order to better serve the needs of virtual reality, cloud gaming, and other services, the XR-enhanced SI (Study Item) for NR (New Radio) Release 18 was approved at the 3GPP (3rd Generation Partnership Project) RAN (Radio Access Network) #90e plenary meeting. One of the key issues is to study how to provide more effective resource assignment and scheduling mechanisms tailored to the characteristics of XR services.

**Summary of Invention**

The inventors found through research that when a control information block and a set of code blocks are reused for transmission within the same RE (Resource Element) resource block, the relationship between the number of coded modulation symbols per layer used for transmitting the control information block and the RE resource block is a key issue.

The present application discloses a solution to the above problems. It should be noted that although the above description uses uplink and downlink as examples, this application is also applicable to other scenarios, such as the companion link, and achieves similar technical effects as in the uplink and downlink. In addition, adopting a unified solution for different scenarios (including but not limited to downlink, uplink, and companion links) also helps reduce hardware complexity and cost. Embodiments of any of the nodes of the present application and the features of the embodiments may be applied to other nodes, and vice versa without conflict. The embodiments of the present application and the features in the embodiments may be arbitrarily combined with one another without conflict.

As one embodiment, the terminology in the present application is interpreted with reference to the definitions in the 3GPP TS36 series-specification protocol.

As one embodiment, the terminology in the present application is interpreted with reference to the definitions in the 3GPP TS38 series-specification protocol.

As one embodiment, the terminology in the present application is interpreted with reference to the definitions in the 3GPP TS37 series-specification protocol.

As one embodiment, the terminology in the present application is interpreted with reference to the definitions in the IEEE (Institute of Electrical and Electronics Engineers) specification protocol.

Disclosed in the present application is a method used in a first node for wireless communication, characterized in that, the method comprises:

receiving first signaling, where the first signaling is used to indicate a first RE set;
sending a first code block set and a first bit block in only a target RE subset within the first RE set;
wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

As one embodiment, an issue to be addressed by the present application includes: the relationship between the number of coded modulation symbols per layer used for transmitting a control information block and the RE resource block when the control information block and a code block set are multiplexed for transmission within the same RE resource block.

According to one aspect of the present application, characterized in that, the number of REs comprised in a first reference RE group within the first RE set is used to determine a third integer, and the first target integer is not greater than the third integer; the first reference RE group comprises all REs that satisfy a second condition under the assumption that the first RE set is used for PUSCH transmission, wherein the second condition comprises not belonging to the symbols in the first RE set where DMRS is located, and not being occupied by PTRS.

According to one aspect of the present application, characterized in that, the first target integer is equal to the smallest of the first integer, the second integer, and the third integer.

According to one aspect of the present application, characterized in that, the number of all REs in the target RE subset that satisfy the first condition is not less than the first integer; alternatively, a fourth integer is the smallest positive integer that is not less than the product of a first coefficient and the number of all REs in the target RE subset that satisfy the first condition, and the fourth integer is not less than the first integer.

According to one aspect of the present application, characterized in that, the number of all REs in the target RE subset that satisfy the first condition is not less than the smaller of the first integer and the third integer; alternatively, a fourth integer is the smallest positive integer that is not less than the product of a first coefficient and the number of all REs in the target RE subset that satisfy the first condition, and the fourth integer is not less than the smaller of the first integer and the third integer.

According to one aspect of the present application, characterized in that, the method comprises:

further sending a second bit block in the target RE subset;
wherein the second bit block is used to indicate at least one of the symbols occupied by the target RE subset or the RBs occupied by the target RE subset.

According to one aspect of the present application, characterized in that, the method comprises:

receiving a second signaling;
wherein the second signaling is used to indicate a second RE set, with the second RE set being reserved for the first control information block, and the first RE set and the second RE set overlapping in the time domain.

Disclosed in the present application is a method used in a second node for wireless communication, characterized in that, the method comprises:

sending first signaling, where the first signaling is used to indicate a first RE set;
receiving a first code block set and a first bit block in only a target RE subset within the first RE set;
wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

According to one aspect of the present application, characterized in that, the number of REs comprised in a first reference RE group within the first RE set is used to determine a third integer, and the first target integer is not greater than the third integer; the first reference RE group comprises all REs that satisfy a second condition under the assumption that the first RE set is used for PUSCH transmission, wherein the second condition comprises not belonging to the symbols in the first RE set where DMRS is located, and not being occupied by PTRS.

According to one aspect of the present application, characterized in that, the first target integer is equal to the smallest of the first integer, the second integer, and the third integer.

According to one aspect of the present application, characterized in that, the number of all REs in the target RE subset that satisfy the first condition is not less than the first integer; alternatively, a fourth integer is the smallest positive integer that is not less than the product of a first coefficient and the number of all REs in the target RE subset that satisfy the first condition, and the fourth integer is not less than the first integer.

According to one aspect of the present application, characterized in that, the number of all REs in the target RE subset that satisfy the first condition is not less than the smaller of the first integer and the third integer; alternatively, a fourth integer is the smallest positive integer that is not less than the product of a first coefficient and the number of all REs in the target RE subset that satisfy the first condition, and the fourth integer is not less than the smaller of the first integer and the third integer.

According to one aspect of the present application, characterized in that, the method comprises:

further receiving a second bit block in the target RE subset;
wherein the second bit block is used to indicate at least one of the symbols occupied by the target RE subset or the RBs occupied by the target RE subset.

According to one aspect of the present application, characterized in that, the method comprises:

sending a second signaling;
wherein the second signaling is used to indicate a second RE set, with the second RE set being reserved for the first control information block, and the first RE set and the second RE set overlapping in the time domain.

Disclosed in the present application is a first node equipment for wireless communication, characterized in that, the equipment comprises:

a first receiver receiving first signaling, where the first signaling is used to indicate the first RE set;
a first transmitter sending a first code block set and a first bit block in only a target RE subset within the first RE set; wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

Disclosed in the present application is a second node equipment for wireless communication, characterized in that, the equipment comprises:

a second transmitter sending first signaling, where the first signaling is used to indicate a first RE set;
a second receiver receiving a first code block set and a first bit block in only a target RE subset within the first RE set; wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

As one embodiment, the present application has the following advantages over conventional solutions:

- it enables flexible determination of the resources occupied by the transmission based on the size of the code block set, thereby improving resource utilization efficiency;
- and it establishes the relationship between the number of coded modulation symbols per layer used for transmitting the control information block and the size of the flexibly adjusted resources, ensuring reliable transmission of the control information block.

## Description of Accompanying Drawings

Other features, objectives, and advantages of the present application will become more apparent by reading the detailed description of the non-limiting embodiments with reference to the following accompanying drawings:

FIG. 1 shows a flow chart of first signaling, a first code block set, and a first bit block according to one embodiment of the present application;
FIG. 2 shows a schematic diagram of a network architecture according to one embodiment of the present application;

FIG. 3 shows a schematic diagram of one embodiment of a wireless protocol architecture for a user plane and a control plane, according to one embodiment of the present application;

FIG. 4 shows a schematic diagram of a first communication equipment and a second communication equipment according to one embodiment of the present application;

FIG. 5 shows a transmission flow chart according to one embodiment of the present application;

FIG. 6 shows a schematic diagram of a first target integer according to one embodiment of the present application;

FIG. 7 shows a schematic diagram of a first target integer according to another embodiment of the present application;

FIG. 8 shows a schematic diagram of a first target integer according to another embodiment of the present application;

FIG. 9 shows a schematic diagram of a first target integer according to another embodiment of the present application;

FIG. 10 shows a schematic diagram of a target RE subset according to one embodiment of the present application;

FIGS. 11A - 11B show a schematic diagram of a target RE subset according to another embodiment of the present application;

FIGS. 12A - 12B show a schematic diagram of a target RE subset according to one embodiment of the present application;

FIG. 13 shows a schematic diagram of a first number of symbols and a first number of RBs according to another embodiment of the present application;

FIG. 14 shows a schematic diagram of a first number of symbols and a first number of RBs according to another embodiment of the present application;

FIG. 15 shows a structural block diagram of a processing apparatus in a first node equipment according to one embodiment of the present application;

FIG. 16 shows a structural block diagram of a processing apparatus in a second node equipment according to one embodiment of the present application.

Specific **Embodiments**

The technical solutions of the present application will be described in further detail below in conjunction with the accompanying drawings, and it is to be noted that the embodiments in the present application and the features in the embodiments may be arbitrarily combined with each other without conflict.

Embodiment **1**

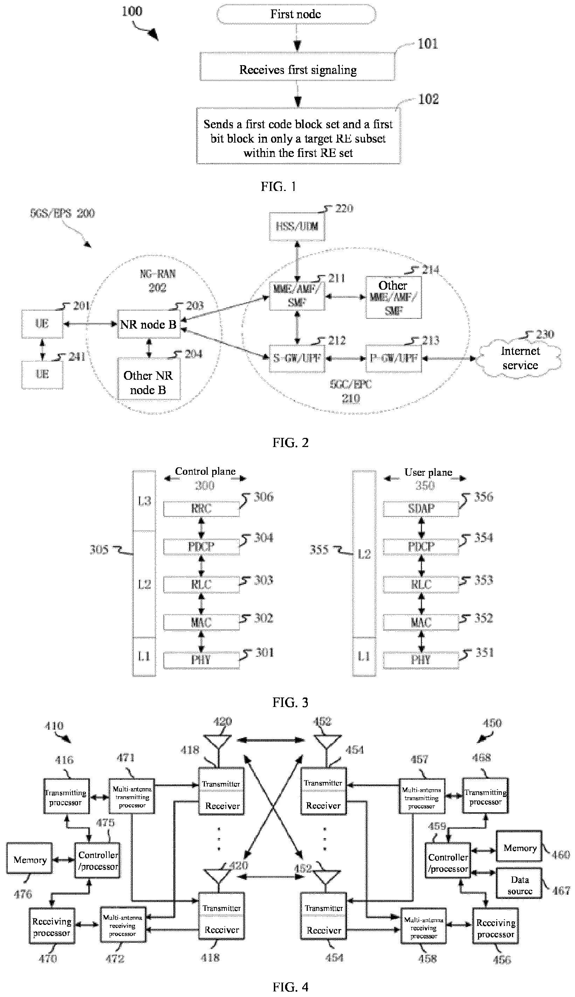

Embodiment 1 exemplifies a flow chart of first signaling, a first code block set, and a first bit block according to one embodiment of the present application, as shown in FIG. 1. In the 100 shown in FIG. 1, each box represents a step.

In Embodiment 1, the first node in the present application receives first signaling in Step 101; in Step 102, it sends a first code block set and a first bit block in only a target RE subset within a first RE set, wherein the first signaling is used to indicate the first RE set, which is reserved for the first code block set, and the number of bits in the first code block set is used to determine the target RE subset from the first RE set; the first control information block comprises the first bit block, and the number of bits in the first control information block and the number of bits in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

As one embodiment, the first signaling is physical layer signaling.

As one embodiment, the first signaling is DCI (Downlink Control Information) signaling.

As one embodiment, the first signaling is higher layer signaling.

As one embodiment, the first signaling is RRC signaling.

As one embodiment, the first signaling is MAC CE signaling.

As one embodiment, the higher layer signaling is RRC signaling.

As one embodiment, the higher layer signaling is MAC CE signaling.

As one embodiment, the first signaling schedules a Physical Uplink Shared Channel (PUSCH), and the first Resource Element (RE) set comprises all REs scheduled for the PUSCH.

As one embodiment, the first signaling schedules a Configured Grant (CG) PUSCH.

As one embodiment, the first signaling schedules a CG PUSCH, and the first RE set comprises all REs of the CG PUSCH scheduled by the first signaling.

As one embodiment, the first signaling schedules a CG PUSCH, and the first RE set comprises all REs of a transmission occasion for the CG PUSCH scheduled by the first signaling.

As one embodiment, the first signaling is a DCI signaling in which a CRC (Cyclic Redundancy Check) is scrambled using a CS (Configured Scheduling)-RNTI (Radio Network Temporary Identifier), and the first signaling schedules a CG PUSCH.

As one embodiment, the first signaling is a DCI signaling in which a CRC is scrambled using a C (Cell)-RNTI, and the first signaling schedules a CG PUSCH.

As one embodiment, the first RE set consists of all REs occupied by a PUSCH reserved for the first code block set.

As one embodiment, the meaning of the phrase "the first RE set is reserved for the first code block set" comprises: the first RE set being configured or scheduled for the first code block set.

As one embodiment, the meaning of the phrase "the first RE set is reserved for the first code block set" comprises: the first RE set comprising of all REs reserved for carrying the PUSCH of the first code block set.

As one embodiment, the meaning of the phrase "the first RE set is reserved for the first code block set" comprises: the first RE set being assigned to the first code block set.

As one embodiment, the meaning of the phrase "the first RE set is reserved for the first code block set" comprises: at the time of sending the first signaling, the first RE set being scheduled for the transmission of the first code block set.

As one embodiment, the meaning of the phrase "the first RE set is reserved for the first code block set" comprises: the actual transmission of the first code block set occupying part or all of the REs in the first RE set.

As one embodiment, the first code block set comprises all code blocks in one Transport Block (TB).

As one embodiment, the first code block set comprises all code blocks in at least one Transport Block (TB).

As one embodiment, the first code block set comprises at least one code block in a TB.

As one embodiment, the first code block set comprises at least one code block in at least one TB.

As one embodiment, the meaning of the phrase "the first RE set is reserved for the first code block set" comprises: The first RE set is reserved for one repetition of the first code block set.

As one embodiment, the meaning of the phrase "the first signaling is used to indicate the first RE set" comprises: the first signaling comprising a first field and a second field, where the first field in the first signaling indicates the symbols occupied by the first RE set, and the second field in the first signaling indicates the RB (Resource Block) occupied by the first RE set.

As one embodiment, the meaning of the phrase "the first signaling is used to indicate the first RE set" comprises: the first signaling being used to indicate M RE sets, with the first RE set being one of the M RE sets, where M is a positive integer greater than 1.

As one embodiment, the meaning of the phrase "the first signaling is used to indicate the first RE set" comprises: the first signaling comprising a first field and a second field, where the first field in the first signaling indicates the symbols occupied by the earliest RE set among the M RE sets, and the second field in the first signaling indicates the RBs occupied by the earliest RE set among the M RE sets; the first RE set is one of the M RE sets, where M is a positive integer greater than 1.

As one embodiment, the meaning of the phrase "the first signaling is used to indicate the first RE set" comprises: the first signaling comprising a first field and a second field, where the first field in the first signaling indicates the symbols occupied by the earliest RE set among the M RE sets and M, where the first RE set is one of the M RE sets, with M being a positive integer greater than 1; and the second field in the first signaling indicates the RBs occupied by the earliest RE set among the M RE sets.

As one embodiment, the first signaling is DCI signaling, where the first field is the Time Domain Resource Assignment field, and the second field is the Frequency Domain Resource Assignment field.

As one embodiment, the first signaling is RRC signaling, where the name of the first field comprises frequency-DomainAllocation, and the name of the second field comprises frequencyDomainAllocation.

As one embodiment, the first signaling is RRC signaling, where the first field and the second field are two fields in the RRC IE ConfiguredGrantConfig.

As one embodiment, the specific definitions of the frequencyDomainAllocation field, frequencyDomainAllocation, and the RRC IE ConfiguredGrantConfig can be found in Section 6.3.2 of 3GPP TS38.331.

As one embodiment, the specific definitions of the Time Domain Resource Assignment Field and the Frequency Domain Resource Assignment field can be found in Section 7.3 of 3GPP TS38.212.

As one embodiment, one RE occupies one symbol in the time domain and one subcarrier in the frequency domain.

As one embodiment, the symbol is a single-carrier symbol.

As one embodiment, the symbol is a multi-carrier symbol.

As one embodiment, the symbol is an OFDM (Orthogonal Frequency Division Multiplexing) symbol.

As one embodiment, the symbol is an SC-FDMA (Single Carrier-Frequency Division Multiple Access) symbol.

As one embodiment, the symbol is a DFT-s-OFDM (Discrete Fourier Transform-Spread Orthogonal Frequency Division Multiplexing) symbol.

As one embodiment, the symbol is an FBMC (Filter Bank Multi-Carrier) symbol.

As one embodiment, the symbol comprises a CP (Cyclic Prefix).

As one embodiment, the symbol is an OFDM symbol with transform precoding (or transform precoder) disabled.

As one embodiment, the symbol is an OFDM symbol with transform precoding (or transform precoder) enabled.

As one embodiment, the target RE subset comprises part of the first RE set.

As one embodiment, the target RE subset comprises part or all of the first RE set.

Typically, the target RE subset belongs to the first RE set, where the first RE set comprises all REs reserved for carrying the first code block set's PUSCH, and the target RE subset comprises all REs occupied by the PUSCH that actually transmits the first code block set.

As one embodiment, the first control information block comprises UCI (Uplink Control Information).

As one embodiment, the first control information block comprises HARQ-ACK (Hybrid Automatic Repeat reQuest - Acknowledgement).

As one embodiment, the first control information block comprises at least one of HARQ-ACK, SR (Scheduling Request), or CSI (Channel State Information).

As one embodiment, the first control information block comprises CSI.

As one embodiment, the first signaling triggers CSI, and the first control information block comprises the CSI triggered by the first signaling.

As one embodiment, the first signaling triggers aperiodic CSI, and the first control information block comprises the aperiodic CSI triggered by the first signaling.

As one embodiment, the CSI comprises at least one of CRI (Channel State Information Reference Signal Resource Indicator), SSBRI (Synchronization Signal/Physical Broadcast Channel Block Resource Indicator), LI (Layer Indicator), PMI (Precoding Matrix Indicator), CQI (Channel Quality Indicator), L1-RSRP (Layer 1 Reference Signal Received Power), L1-RSRQ (Layer 1 Reference Signal Received Quality), or L1-SINR (Layer 1 Signal to Interference and Noise Ratio).

As one embodiment, the first signaling schedules a CG PUSCH, and the first control information block comprises the CG UCI.

As one embodiment, the first control information block is used to indicate the target RE subset.

As one embodiment, the first control information block is used to indicate at least one of the symbols occupied by the target RE subset or the RBs occupied by the target RE subset.

As one embodiment, the first control information block is scheduled by signaling other than the first signaling.

As one embodiment, the first control information block comprises more than one bit, and the first bit block comprises part of the bits in the first control information block.

As one embodiment, the first bit block comprises all the bits in the first control information block.

As one embodiment, the first bit block comprises at least one of the bits in the first control information block.

As one embodiment, the first bit block comprises part or all of the bits in the first control information block.

As one embodiment, the priority of the first control information block is higher than the priority of the first code block set.

As one embodiment, the index of the priority of the first control information block is 1, and the index of the priority of the first code block set is 0.

As one embodiment, the index of the priority of the first control information block is greater than the index of the priority of the first code block set.

As one embodiment, the index of the priority is the priority index.

As one embodiment, the specific definition of the priority index can be found in Sections 5 and 6 of 3GPP TS38.214.

As one embodiment, the number of bits comprised in the first control information block, the number of bits comprised in the first code block set, and the first reference integer are collectively used to determine the first integer, where the first reference integer is a positive integer.

As one embodiment, the number of bits comprised in the first control information block, the number of bits comprised in the first code block set, the first reference integer, and the second coefficient are collectively used to determine the first integer, where the first reference integer is a positive integer.

As one embodiment, the sum of the number of bits comprised in the first control information block and the second reference integer is equal to the third reference integer. The first target value and the second target value are linearly related, with the second target value being the result of dividing the third reference integer by the number of bits comprised in the first code block set. The first integer is the smallest positive integer that is greater than or equal to the first target value.

As one embodiment, the sum of the number of bits comprised in the first control information block and the second reference integer is equal to the third reference integer. The first target value and the third target value are linearly related, with the third target value being the result of multiplying the third reference integer by the first reference integer and then dividing by the number of bits comprised in the first code block set. The first integer is the smallest positive integer that is greater than or equal to the first target value.

As one embodiment, the sum of the number of bits comprised in the first control information block and the second reference integer is equal to the third reference integer. The first target value is equal to the value obtained by multiplying the third reference integer, the second coefficient, and the first reference integer, and then dividing by the number of bits comprised in the first code block set. The first integer is the smallest positive integer that is greater than or equal to the first target value.

As one embodiment, the second reference integer is the number of CRC bits of the first control information block.

As one embodiment, the CG UCI is transmitted in the target RE subset, and the second reference integer is an integer obtained by adding the number of bits of the CG UCI and the number of CRC bits.

As one embodiment, the CG UCI is transmitted in the target RE subset, and the second reference integer is an integer obtained by adding the number of CG UCI bits and the number of CRC bits of the first control information block and the CG UCI.

As one embodiment, the second reference integer is an integer obtained by adding the number of CRC bits to the second bit block.

As one embodiment, the second reference integer is an integer obtained by adding the number of bits in the second bit block and the number of CRC bits of the first control information block and the second bit block.

As one embodiment, when the number of bits comprised in the first control information block is not less than 360, the second reference integer is 11; when the number of bits comprised in the first control information block is less than 360, the second reference integer is the number of CRC bits of the first control information block.

As one embodiment, the CG UCI is transmitted in the target RE subset; when the sum of the number of bits comprised in the first control information block and the number of bits comprised in the CG UCI is not less than 360, the second reference integer is 11; when the sum of the number of bits comprised in the first control information block and the number of bits comprised in the CG UCI is less than 360, the second reference integer is the number of CRC bits of the first control information block and the CG UCI.

As one embodiment, the first reference integer is the number of all REs in the target RE subset that satisfy a third condition, where the third condition comprises not belonging to symbols in the target RE subset where DMRS (DeModulation Reference Signal) is located, and not being occupied by PTRS (Phase Tracking Reference Signal).

As one embodiment, the first reference integer is the number of REs comprised in the second reference RE group of the first RE set; the second reference RE group comprises all REs that satisfy a fourth condition when the first RE set is assumed to be used for PUSCH transmission, where the fourth condition comprises not belonging to the symbols in the first RE set where DMRS is located and not being occupied by PTRS.

As one embodiment, the second coefficient is a non-negative real number.

As one embodiment, the second coefficient is a positive real number.

As one embodiment, the second coefficient is a positive real number greater than 1.

As one embodiment, the second coefficient is a positive real number not less than 1.

As one embodiment, the second coefficient is $\beta_{offset}^{PUSCH}$.

As one embodiment, the specific definition of $\beta_{offset}^{PUSCH}$ can be found in Section 6.3.2 of 3GPP TS38.212.

As one embodiment, the second coefficient is $\beta_{offset}^{HARQ-ACK}$.

As one embodiment, the specific definition of $\beta_{offset}^{HARQ-ACK}$ can be found in Section 6.3.2 of 3GPP TS38.212.

As one embodiment, the second coefficient is $\beta_{offset}^{CSI-1}$.

As one embodiment, the specific definition of $\beta_{offset}^{CSI-1}$ can be found in Section 6.3.2 of 3GPP TS38.212. As one embodiment, the second coefficient is $\beta_{offset}^{CSI-2}$.

As one embodiment, the specific definition of $\beta_{offset}^{CSI-2}$ can be found in Section 6.3.2 of 3GPP TS38.212. As one embodiment, the second coefficient is $\beta_{offset}^{AUL-UCI}$.

As one embodiment, the specific definition of $\beta_{offset}^{AUL-UCI}$ can be found in Section 5.2 of 3GPP TS36.212 (V15.3.0).

As one embodiment, the second coefficient is $\beta_{offset}^{CG-UCI}$.

As one embodiment, the specific definition of $\beta_{offset}^{CG-UCI}$ can be found in Section 6.3.2 of 3GPP TS38.212.

As one embodiment, the second coefficient is indicated by a higher layer parameter.

As one embodiment, the second coefficient is configured by an RRC parameter.

As one embodiment, the second coefficient is configured by a part of the fields in the RRC IE Configured-GrantConfig.

As one embodiment, the second coefficient is configured by an RRC parameter whose name comprises betaOffsetCG-UCI.

As one embodiment, the first signaling is used to indicate the second coefficient.

As one embodiment, the first signaling comprises a fourth field, where the fourth field in the first signaling indicates the second coefficient, and the fourth field comprises at least one bit.

As one embodiment, the fourth field is the beta_offset indicator field.

As one embodiment, the specific definition of the beta_offset indicator field can be found in 3GPP TS38.212.

As one embodiment, the second bit block in the present application is also used to indicate the second coefficient.

As one embodiment, the first condition further comprises: the symbols being no earlier than the first symbol that does not carry DMRS after the first DMRS symbol in the target RE subset.

As one embodiment, the first condition comprises: not belonging to the symbols in the target RE subset where DMRS is located and not being occupied by PTRS, with the symbols being no earlier than the first symbol that does not carry DMRS after the first DMRS symbol in the target RE subset.

Typically, the first DMRS symbol refers to the earliest symbol in the time domain that carries DMRS.

Typically, the "first symbol that does not carry DMRS" refers to the earliest symbol in the time domain that does not carry DMRS.

As one embodiment, the second integer is equal to the number of all REs in the target RE subset that satisfy the first condition.

As one embodiment, the second integer is the smallest positive integer that is not less than the product of the first coefficient and the number of all REs in the target RE subset that satisfy the first condition.

As one embodiment, the second integer is equal to the number of all REs in the target RE subset that satisfy the first condition, minus the number of coded modulation symbols per layer used for the transmission of the second bit block in the target RE subset.

As one embodiment, the fourth integer is the smallest positive integer that is not less than the product of the first coefficient and the number of all REs in the target RE subset that satisfy the first condition, and the second integer is equal to the fourth integer minus the number of coded modulation symbols per layer used for the transmission of the second bit block in the target RE subset.

As one embodiment, the first coefficient is a non-negative real number.

As one embodiment, the first coefficient is a positive real number.

As one embodiment, the first coefficient is a non-negative real number not greater than 1.

As one embodiment, the first coefficient is a non-negative real number less than 1.

As one embodiment, the first coefficient is a positive real number not greater than 1.

As one embodiment, the first coefficient is a positive real number less than 1.

As one embodiment, the first coefficient is configured by a higher layer parameter.

As one embodiment, the first coefficient is configured by an RRC parameter.

As one embodiment, the first coefficient is configured by the RRC parameter "scaling".

As one embodiment, the second bit block in the present application is also used to indicate the first coefficient.

As one embodiment, the first signaling is used to indicate the first coefficient.

As one embodiment, the first coefficient is $\alpha$.

As one embodiment, the specific definition of $\alpha$ can be found in Section 6.3.2.4 of 3GPP TS38.212.

## Embodiment 2

Embodiment 2 exemplifies a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of LTE, LTE-A, and future 5G systems is referred to as the EPS (Evolved Packet System) 200. The 5G NR or LTE network architecture 200 may be referred to as the 5GS (5G System)/EPS (Evolved Packet System) 200 or some other suitable term. The 5GS/EPS 200 may comprise one or a plurality of UE 201, one UE 241 for sidelink communication with UE 201, an NG-RAN (next generation wireless access network) 202, a 5GC (5G CoreNetwork)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for simplicity. As shown in FIG. 2, the 5GS/EPS 200 provides packet exchange services. However, it is readily understood by those skilled in the art that various concepts presented throughout the present application may be extended to networks that provide circuit switching services. The NG-RAN 202 comprises an NR (New Radio) node B (gNB) 203 and other gNBs 204. The gNB 203 provides user and control plane protocol termination towards the UE 201. The gNB 203 may be connected to another gNB 204 via an Xn interface (e.g., backhaul). The gNB 203 may also be referred to as a base station, a base transceiver station, a radio base station, a radio transceiver, a transceiver function, a basic service set (BSS), an extended service set (ESS), a TRP (transmit and receive point), or some other suitable term. The gNB 203 provides access points to the 5GC/EPC 210 for the UE 201. Examples of the UE 201 comprise cellular phones, smart phones, session initiation protocol (SIP) phones, laptop computers, personal digital assistants (PDA), satellite radios, global positioning systems, multimedia devices, video devices, digital audio players (e.g., MP3 players), cameras, game consoles, unmanned aerial vehicles, aircrafts, narrowband Internet of Things devices, machine-type communications devices, land vehicles, automobiles, wearable devices, or any other similar functional devices. Those of ordinary skill in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handheld device, a user agent, a mobile client, a client, or some other suitable term. The gNB 203 is connected to the 5GC/EPC 210 via an S1/NG interface. The 5GC/EPC210 comprises an MME (Mobility Management Entity)/AMF (Authentication Management Field)/SMF (Session Management Function) 211, other MME/AMF/SMF 214, an S-GW (Service Gateway)/UPF (user plane function) 212, and a P-GW (Packet Data Network Gateway)/UPF 213. The MME/AMF/SMF 211 is a control node that processes signaling between the UE 201 and the 5GC/EPC 210. In general, the MME/AMF/SMF 211 provides bearer and connection management. All user IPs (Internet Protocol) packets are sent via the S-GW/UPF 212, and the S-GW/UPF 212 is itself connected to the P-GW/UPF 213. The P-GW provides UE IP address assignment as well as other functions. The P-GW/UPF 213 is connected to the Internet service 230. The Internet service 230 comprises the operator's corresponding Internet Protocol services, which may specifically comprise the Internet, an intranet, an IMS (IP Multimedia Subsystem), and packet switching services.

As one embodiment, the first node in the present application comprises the UE 201.

As one embodiment, the second node in the present application comprises the gNB 203.

## Embodiment 3

Embodiment 3 exemplifies a schematic diagram of a wireless protocol architecture for a user plane and a control plane, according to one embodiment of the present application, as shown in FIG. 3.

Embodiment 3 shows a schematic diagram of an embodiment of a wireless protocol architecture for a user plane and a control plane, according to one embodiment of the present application, as shown in FIG. 3. FIG. 3 is a schematic diagram illustrating an embodiment of a radio protocol architecture for a user plane 350 and a control plane 300. FIG. 3 shows, with three layers, a radio protocol architecture of a control plane 300 between a first communication node equipment (RSU in UE, gNB or V2X) and a second communication node equipment (RSU in gNB, UE or V2X), or between the two UEs: Layer 1, Layer 2 and Layer 3. Layer 1 (L1 layer) is the lowest layer and implements various PHY (physical layer) signal processing functions. L1 will be referred to herein as PHY 301. Layer 2 (L2) 305 is above PHY 301 and is responsible for the link between the first communication node equipment and the second communication node equipment, or between the two UEs. L2 305 comprises a MAC (Medium Access Control) sublayer 302, an RLC (Radio Link Control) sublayer 303, and a PDCP (Packet Data Convergence Protocol) sublayer 304, and these sublayers terminate at the second communication node equipment. The PDCP sublayer 304 provides multiplexing between different radio bearers and logical channels. The PDCP sublayer 304 also provides security by encrypting data packets and provides inter-zone movement support between the second communication node equipment and the first communication node equipment. The RLC sublayer 303 provides segmentation and reassembly of upper layer data packets, re-transmission of lost data packets, and re-ordering of data packets to compensate for out-of-sequence reception due to HARQ. The MAC sublayer 302 provides multiplexing between logical and transmission channels. The MAC sublayer 302 is also responsible for distributing various radio resources (e.g., resource blocks) in one cell between first communication node equipment. The MAC sublayer 302 is also responsible for HARQ operations. The RRC (Radio Resource Control) sublayer 306 in Layer 3 (L3) in the control plane 300 is responsible for obtaining radio resources (i.e., radio bearers) and configuring the lower layers using RRC signaling between the second communication node equipment and the first communication node equipment. The radio protocol architecture of the user plane 350 comprises Layer 1 (L1) and Layer 2 (L2), the radio protocol architecture of the user plane 350 for the first communication node equipment and the second communication node equipment is generally identical to the corresponding layer and sublayer in the control plane 300 in terms of a physical layer 351, a PDCP sublayer 354 in L2 355, an RLC sublayer 353 in L2 355, and a MAC sublayer 352 in L2 355, but the PDCP sublayer 354 also provides header compression for upper layer data packets to reduce radio transmission overhead. L2 355 in the user plane 350 also comprises an SDAP (Service Data Adaption Protocol) sublayer 356, and the SDAP sublayer 356 is responsible for mapping between a QoS stream and a data radio bearer (DRB) to support the diversity of the service. Although not shown in the figure, the first communication node equipment may have several upper layers above L2 355, including a network layer (e.g., an IP layer) that terminates at the P-GW on the network side and an application layer that terminates at the other end of the connection (e.g., a remote UE, a server, and the like).

As one embodiment, the wireless protocol architecture in FIG. 3 applies to the first node in the present application.

As one embodiment, the wireless protocol architecture in FIG. 3 applies to the second node in the present application.

As one embodiment, the first signaling is generated in the PHY301 or the PHY351.

As one embodiment, the first signaling is generated in the RRC sublayer 306.

As one embodiment, the first signaling is generated in at least one of the PHY301, the PHY351, or the RRC sublayer 306.

As one embodiment, the second signaling is generated in the PHY301 or the PHY351.

As one embodiment, the second signaling is generated in the RRC sublayer 306.

As one embodiment, the second signaling is generated in at least one of the PHY301, the PHY351, or the RRC sublayer 306.

As one embodiment, the signal carrying the first code block set and the first bit block in only the target RE subset within the first RE set is generated in the PHY301 or the PHY351.

## Embodiment 4

Embodiment 4 exemplifies a schematic diagram of a first communication equipment and a second communication equipment according to one embodiment of the present application, as shown in FIG. 4. FIG. 4 is a block diagram of a first communication equipment 410 and a second communication equipment 450 in communication with each other over an access network.

The first communication equipment 410 comprises a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication equipment 450 comprises a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In the transmission from the first communication equipment 410 to the second communication equipment 450, at the first communication equipment 410, an upper layer data packet from the core network is provided to the controller/processor 475. The controller/processor 475 implements the functionality of L2. In the DL, the controller/processor 475 provides header compression, encryption, packet segmentation and re-ordering, multiplexing between logical and transport channels, and radio resource assignment to the second communication equipment 450 based on various priority measures. The controller/processor 475 is also responsible for HARQ operations, re-transmission of lost packets and signaling to the second communication equipment 450. The transmitting processor 416 and the multi-antenna transmitting processor 471 implement various signal processing functions for L1 (i.e., the physical layer). The transmitting processor 416 implements coding and interleaving to facilitate forward error correction (FEC) at the second communication equipment 450, and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 pre-codes coded and modulated symbols in digital space, including codebook-based pre-coding and non-codebook-based pre-coding, and beamforming processing, generating one or a plurality of parallel streams. The transmitting processor 416 then maps each parallel stream to a sub-carrier, multiplexes the modulated symbols with a reference signal (e.g., pilot) in the time domain and/or frequency domain, and then uses an inverse fast Fourier transform (IFFT) to generate a physical channel of the time domain multi-carrier symbol stream on the carrier. The multi-antenna transmitting processor 471 then sends the analog pre-coding/beamforming operation for the time domain multi-carrier symbol stream. Each transmitter 418 converts the baseband multi-carrier symbol stream provided by the multi-antenna transmitting processor 471 into a radio frequency stream, which is then provided to a different antenna 420.

In the transmission from the first communication equipment 410 to the second communication equipment 450, at the second communication equipment 450, each receiver 454 receives a signal through the respective antenna 452 thereof. Each receiver 454 recovers information that is modulated onto the radio frequency carrier, converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 receives the analog pre-coding/beamforming operation for the baseband multi-carrier symbol stream from the receiver 454. The receiving processor 456 uses fast Fourier transform (FFT) to convert the baseband multi-carrier symbol stream from the time domain to the frequency domain after receiving the analog pre-coding/beamforming operation. In the frequency domain, the physical layer data signal and the reference signal are demultiplexed by the receiving processor 456, wherein the reference signal is used for channel estimation and the data signal restores any parallel stream destined for the second communication equipment 450 after multi-antenna detection by the multi-antenna receiving processor 458. The symbols on each parallel stream are demodulated and restored in the receiving processor 456 and generate a soft decision. The receiving processor 456 then decodes and de-interleaves the soft decision to restore upper layer data and control signals transmitted by the first communication equipment 410 over the physical channel. The upper layer data and control signal are then provided to the controller/processor 459. The controller/processor 459 implements the functions of L2. The controller/processor 459 may be associated with the memory 460 storing program code and data. The memory 460 may be referred to as a computer-readable medium. In the DL, the controller/processor 459 provides demultiplexing between transport and logical channels, packet reassembly, decryption, header decompression, and control signal processing to restore the upper layer data packet from the core network. The upper layer data packet is then provided to all protocol layers above L2. Various control signals may also be provided to L3 for L3 processing. The controller/processor 459 is also responsible for error detection using acknowledgment (ACK) and/or negative acknowledgment (NACK) protocols to support HARQ operations.

In the transmission from the second communication equipment 450 to the first communication equipment 410, at the second communication equipment 450, the data source 467 is used to provide the upper layer data packet to the controller/processor 459. The data source 467 represents all protocol layers above L2. Similar to the transmission function at the first communication equipment 410 described in the DL, the controller/processor 459 implements header compression, encryption, packet segmentation, and reordering, and multiplexing between logical and transmission channels based on wireless resource assignment of the first communication equipment 410, implementing L2 layer functions for the user plane and control plane. The controller/processor 459 is also responsible for HARQ operations, the re-transmission of lost packets, and signaling to the first communication equipment 410. The transmitting processor 468 performs modulation mapping and channel coding processing, the multi-antenna transmitting processor 457 carries out digital multi-antenna spatial pre-coding, including codebook-based precoding and non-codebook-based pre-coding, and beamforming processing, and then the transmitting processor 468 modulates the generated parallel stream to a multi-carrier/single-carrier symbol stream, which is then sent to a different antenna 452 via the transmitter 454 after the analog pre-coding/beamforming operation by the multi-antenna transmitting processor 457. Each transmitter 454 first converts the baseband symbol stream provided by the multi-antenna transmitting processor 457 into a radio frequency symbol stream, which is then provided to the antenna 452.

In the transmission from the second communication equipment 450 to the first communication equipment 410, the functions at the first communication equipment 410 are similar to the receiving function at the second communication equipment 450 described in the transmission from the first communication equipment 410 to the second communication equipment 450. Each receiver 418 receives a radio frequency signal through the respective antenna 420 thereof, converts the received radio frequency signal into a baseband signal, and provides the baseband signal to the multi-antenna receiving processor 472 and the receiving processor 470. The receiving processor 470 and the multi-antenna receiving processor 472 collectively implement the functions of L1. The controller/processor 475 implements the function of L2. The controller/processor 475 may be associated with the memory 476 storing program code and data. The memory 476 may be referred to as a computer-readable medium. The controller/processor 475 provides demultiplexing between transport and logical channels, packet reassembly, decryption, header decompression, and control signal processing to restore the upper layer data packet from the second communication equipment 450. The upper layer data packet from the controller/processor 475 may be provided to the core network. The controller/processor 475 is also responsible for error detection using ACK and/or NACK protocols to support HARQ operations.

As one embodiment, the second communication equipment 450 comprises: at least one processor and at least one memory, wherein the at least one memory comprises a computer program code; the at least one memory and the computer program code are configured to be used with the at least one processor. The second communication equipment 450 apparatus is configured for at least: receiving first signaling, which is used to indicate a first RE set; sending a first code block set and a first bit block in only a target RE subset within the first RE set; wherein the first RE set is reserved for the first code block set, and the number of bits comprised in the first code block set is used to determine the target RE subset from the first RE set; a first control information block comprises the first bit block, and the number of bits comprised in the first control information block, together with the number of bits comprised in the first code block set, is used to determine a first integer; the number of all REs in the target RE subset that satisfy a first condition is used to determine a second integer, wherein the first condition comprises not belonging to the symbols in the target RE subset where DMRS is located, and not being occupied by PTRS; a first target integer is the number of coded modulation symbols per layer used for the transmission of the first bit block in the target RE subset, and the first target integer is not greater than the first integer and not greater than the second integer; the first code block set comprises at least one code block, the first control information block comprises at least one bit, and the first bit block comprises at least one bit.

As one embodiment, the second communication equipment 450 comprises: a memory storing a computer-readable instruction program that, when executed by at least one processor, generates an action, the action comprises: receiving first signaling, which is used to indicate a first RE set; sending a first code block set and a first bit block in only a target RE subset within the first RE set; wherein the first RE set is reserved for the first code block set, and the number of bits comprised in the first code block set is used to determine the target RE subset from the first RE set; a first control information block comprises the first bit block, and the number of bits comprised in the first control information block, together with the number of bits comprised in the first code block set, is used to determine a first integer; the number of all REs in the target RE subset that satisfy a first condition is used to determine a second integer, wherein the first condition comprises not belonging to the symbols in the target RE subset where DMRS is located, and not being occupied by PTRS; a first target integer is the number of coded modulation symbols per layer used for the transmission of the first bit block in the target RE subset, and the first target integer is not greater than the first integer and not greater than the second integer; the first code block set comprises at least one code block, the first control information block comprises at least one bit, and the first bit block comprises at least one bit.

As one embodiment, the first communication equipment 410 comprises: at least one processor and at least one memory, wherein the at least one memory comprises a computer program code; the at least one memory and the computer program code are configured to be used with the at least one processor. The first communication equipment 410 apparatus is configured for at least: sending first signaling, which is used to indicate a first RE set; receiving a first code block set and a first bit block in only a target RE subset within the first RE set; wherein the first RE set is reserved for the first code block set, and the number of bits comprised in the first code block set is used to determine the target RE subset from the first RE set; a first control information block comprises the first bit block, and the number of bits comprised in the first control information block, together with the number of bits comprised in the first code block set, is used to determine a first integer; the number of all REs in the target RE subset that satisfy a first condition is used to determine a second integer, wherein the first condition comprises not belonging to the symbols in the target RE subset where DMRS is located, and not being occupied by PTRS; a first target integer is the number of coded modulation symbols per layer used for the transmission of the first bit block in the target RE subset, and the first target integer is not greater than the first integer and not greater than the second integer; the first code block set comprises at least one code block, the first control information block comprises at least one bit, and the first bit block comprises at least one bit.

As one embodiment, the first communication equipment 410 comprises: a memory storing a computer-readable instruction program that, when executed by at least one processor, generates an action, the action comprises: sending first signaling, which is used to indicate a first RE set; receiving a first code block set and a first bit block in only a target RE subset within the first RE set; wherein the first RE set is reserved for the first code block set, and the number of bits comprised in the first code block set is used to determine the target RE subset from the first RE set; a first control information block comprises the first bit block, and the number of bits comprised in the first control information block, together with the number of bits comprised in the first code block set, is used to determine a first integer; the number of all REs in the target RE subset that satisfy a first condition is used to determine a second integer, wherein the first condition comprises not belonging to the symbols in the target RE subset where DMRS is located, and not being occupied by PTRS; a first target integer is the number of coded modulation symbols per layer used for the transmission of the first bit block in the target RE subset, and the first target integer is not greater than the first integer and not greater than the second integer; the first code block set comprises at least one code block, the first control information block comprises at least one bit, and the first bit block comprises at least one bit.

As one embodiment, the first node in the present application comprises the second communication equipment 450.

As one embodiment, the second node in the present application comprises the first communication equipment 410.

As one embodiment, at least one of {the antenna 452, the receiver 454, the receiving processor 456, the multi-antenna receiving processor 458, the controller/processor 459, the memory 460, the data source 467} is used to receive the first signaling described in the present application; at least one of {the antenna 420, the transmitter 418, the transmitting processor 416, the multi-antenna transmitting processor 471, the controller/processor 475, the memory 476} is used to send the first signaling described in the present application.

As one embodiment, at least one of {the antenna 452, the receiver 454, the receiving processor 456, the multi-antenna receiving processor 458, the controller/processor 459, the memory 460, the data source 467} is used to receive the second signaling described in the present application; at least one of {the antenna 420, the transmitter 418, the transmitting processor 416, the multi-antenna transmitting processor 471, the controller/processor 475, the memory 476} is used to send the second signaling described in the present application.

As one embodiment, at least one of {the antenna 452, the transmitter 454, the transmitting processor 468, the multi-antenna transmitting processor 457, the controller/processor 459, the memory 460} is used to send the first code block set and the first bit block in only the target RE subset within the first RE set described in the present application; at least one of {the antenna 420, the receiver 418, the receiving processor 470, the multi-antenna receiving processor 472, the controller/processor 475, the memory 476} is used to receive the first code block set and the first bit block in only the target RE subset within the first RE set described in the present application.

## Embodiment 5

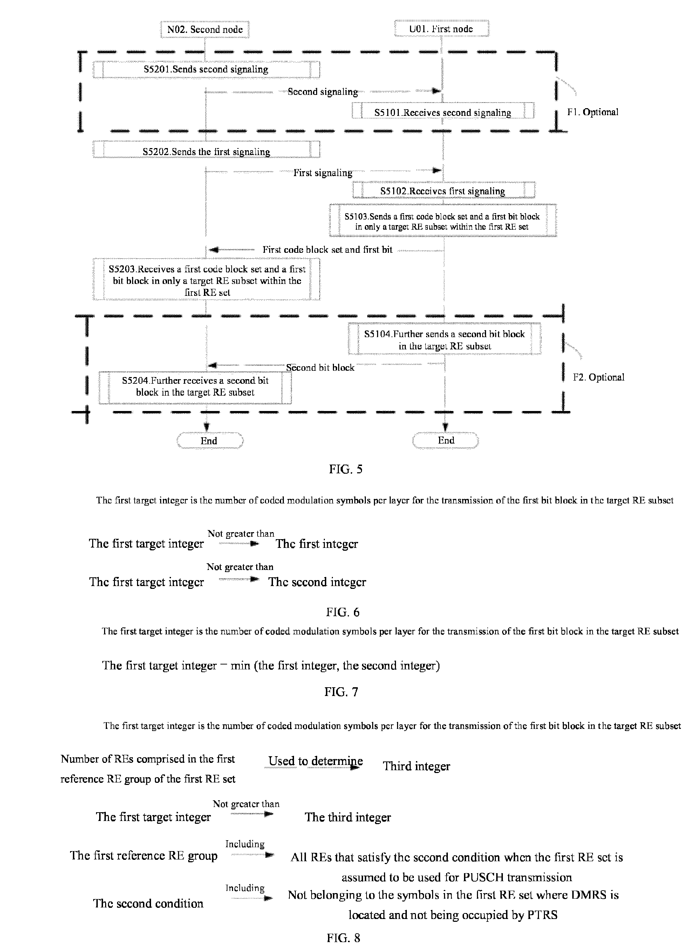

Embodiment 5 exemplifies a wireless transmission flow chart according to one embodiment of the present application, as shown in FIG. 5. In FIG. 5, the first node U01 and the second node N02 are two communication nodes that communicate via an air interface; in FIG. 5, the steps in boxes F1 and F2 are optional.

For the **first node U01,** second signaling is received in Step S5101; first signaling is received in Step S5102; a first code block set and a first bit block are sent in only a target RE subset within the first RE set in Step S5103; and a second bit block is further sent in the target RE subset in Step S5104.

For the **second node N02**, second signaling is sent in Step S5201; first signaling is sent in Step S5202; a first code block set and a first bit block are received in only a target RE subset within the first RE set in Step S5203; and a second bit block is further received in the target RE subset in Step S5204.

In Embodiment 5, the first signaling is used to indicate the first RE set; wherein the first RE set is reserved for the first code block set, and the number of bits comprised in the first code block set is used to determine the target RE subset from the first RE set; the first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit. The second bit block is used to indicate at least one of the symbols occupied by the target RE subset or the RBs occupied by the target RE subset. The second signaling is used to indicate a second RE set, with the second RE set being reserved for the first control information block, and the first RE set and the second RE set overlapping in the time domain.

As one embodiment, the second bit block comprises the CG UCI.

As one embodiment, the second bit block comprises the CG UCI.

As one embodiment, the second bit block further comprises at least one of the HARQ process number, redundancy version, or new data indicator.

As one embodiment, the second bit block is used to indicate the symbols occupied by the target RE subset.

As one embodiment, the second bit block is used to indicate the RBs occupied by the target RE subset.

As one embodiment, the second bit block is used to indicate the symbols occupied by the target RE subset and the RBs occupied by the target RE subset.

As one embodiment, the second bit block indicates the proportion of the target RE subset in the first RE set.

As one embodiment, the second bit block indicates the number of symbols occupied by the target RE subset.

As one embodiment, the second bit block indicates the number of RBs occupied by the target RE subset.

As one embodiment, the second bit block indicates at least one of the number of symbols occupied by the target RE subset or the number of RBs occupied by the target RE subset.

As one embodiment, the second bit block indicates the number of symbols occupied by the target RE subset and the number of RBs occupied by the target RE subset.

As one embodiment, the second signaling is physical layer signaling.

As one embodiment, the second signaling is DCI (Downlink Control Information) signaling.

As one embodiment, the second signaling is higher layer signaling.

As one embodiment, the second signaling is RRC signaling.

As one embodiment, the second signaling is MAC CE signaling.

As one embodiment, the higher layer signaling is RRC signaling.

As one embodiment, the higher layer signaling is MAC CE signaling.

As one embodiment, the second RE set comprises at least one RE.

As one embodiment, the second RE set consists of all REs occupied by a PUCCH (Physical Uplink Control Channel) resource.

As one embodiment, the second RE set consists of all REs occupied by a PUCCH resource reserved for the first control information block.

As one embodiment, the first control information block is abandoned for transmission in the second RE set, and part or all of the bits in the first control information block are reused for transmission in the target RE subset.

As one embodiment, the meaning of the phrase "the second RE set being reserved for the first control information block" comprises: the second RE set being configured or scheduled for the first control information block.

As one embodiment, the meaning of the phrase "the second RE set being reserved for the first control information block" comprises: the second RE set being assigned to the first control information block.

As one embodiment, the meaning of the phrase "the second RE set being reserved for the first control information block" comprises: at the time of sending the second signaling, the second RE set being scheduled for the transmission of the first control information block.

As one embodiment, the meaning of the phrase "the second RE set being reserved for the first control information block" comprises: the actual transmission of the first control information block occupying part or all of the REs in the second RE set.

As one embodiment, the meaning of the phrase "the second RE set being reserved for the first control information block" comprises: the actual transmission of the first control information block not occupying the second RE set.

As one embodiment, the meaning of the phrase "the second RE set being reserved for the first control information block" comprises: the first control information block being abandoned for transmission in the second RE set.

As one embodiment, the second signaling explicitly indicates the second RE set.

As one embodiment, the second signaling implicitly indicates the second RE set.

As one embodiment, the second signaling directly indicates the second RE set.

As one embodiment, the second signaling indirectly indicates the second RE set.

As one embodiment, the second signaling indicates the symbols occupied by the second RE set in the time domain and the subcarriers occupied by the second RE set in the frequency domain.

As one embodiment, the second signaling indicates the symbols occupied by the second RE set in the time domain and the RBs occupied by the second RE set in the frequency domain.

As one embodiment, the second signaling comprises a third field, where the third field in the second signaling is used to indicate the second RE set; the third field comprises at least one bit.

As one sub-embodiment of the embodiment described above, the third field in the second signaling indicates the index of the second RE set in the reference RE pool, where the reference RE pool comprises at least one RE set, and the second RE set is one of the RE sets in the reference RE pool, with each RE set comprising at least one RE.

As one sub-embodiment of the embodiment described above, the third field in the second signaling indicates the index of the first air interface resource set in the reference air interface resource pool, where the reference air interface resource pool comprises at least one air interface resource set, and the first air interface resource set is one of the air interface resource sets in the reference air interface resource pool. The second RE set consists of all the REs occupied by the first air interface resource set in the time-frequency domain, where each air interface resource set in the time-frequency domain comprises at least one RE.

As one sub-embodiment of the embodiment described above, the third field in the second signaling indicates the index of the first PUCCH resource in a PUCCH resource set, where the PUCCH resource set comprises at least one PUCCH resource, and the first PUCCH resource is one of the PUCCH resources in the PUCCH resource set. The second RE set consists of all REs occupied by the first PUCCH resource in the time-frequency domain, where each PUCCH resource comprises at least one RE in the time-frequency domain.

As one sub-embodiment of the embodiment described above, the third field is the PUCCH resource indicator field.

As one embodiment, the specific definition of the PUCCH resource indicator field can be found in Section 7.3.1 of 3GPP TS38.212.

As one embodiment, the first control information block comprises the HARQ-ACK (Hybrid Automatic Repeat reQuest - Acknowledgement) associated with the second signaling.

As one embodiment, the HARQ-ACK associated with the second signaling comprises a NACK.

As one embodiment, the HARQ-ACK associated with the second signaling comprises an ACK or a NACK.

As one embodiment, the HARQ-ACK associated with the second signaling indicates whether each bit in the bit block set scheduled by the second signaling is correctly received.

As one sub-embodiment of the embodiment described above, the bit block set scheduled by the second signaling comprises one TB.

As one sub-embodiment of the embodiment described above, the bit block set scheduled by the second signaling comprises at least one TB.

As one sub-embodiment of the embodiment described above, the bit block set scheduled by the second signaling comprises at least one CB (code block).

As one sub-embodiment of the embodiment described above, the bit block set scheduled by the second signaling comprises at least one CBG (code block group).

As one embodiment, the HARQ-ACK associated with the second signaling indicates whether the second signaling is correctly received.

As one embodiment, the second signaling is used to indicate SPS (Semi-Persistent Scheduling) release, and the HARQ-ACK associated with the second signaling indicates whether the second signaling is correctly received.

As one embodiment, the second signaling is used to schedule the PDSCH (Physical Downlink Shared Channel), and the HARQ-ACK associated with the second signaling indicates whether the PDSCH scheduled by the second signaling is correctly received.

As one embodiment, the first receiver receives the first signal; wherein the second signaling is used to indicate the time-frequency resources occupied by the first signal, and the first control information block comprises the HARQ-ACK for the first signal.

As one sub-embodiment of the embodiment described above, the first control information block comprises the HARQ-ACK associated with the second signaling, and the HARQ-ACK associated with the second signaling is the HARQ-ACK for the first signal.

As one sub-embodiment of the embodiment described above, the transmission channel of the first signal is the DL-SCH (Downlink Shared Channel).

As one sub-embodiment of the embodiment described above, the first signal is transmitted on the PDSCH.

As one sub-embodiment of the embodiment described above, the first signal carries one bit block set.

As one sub-embodiment of the embodiment described above, the first signal carries one TB.

As one sub-embodiment of the embodiment described above, the first signal carries at least one TB.

As one sub-embodiment of the embodiment described above, the first signal carries at least one CB.

As one sub-embodiment of the embodiment described above, the first signal carries at least one CBG (Code Block Group).

As one sub-embodiment of the embodiment described above, the first signal carries the bit block set scheduled by the second signaling.

As one sub-embodiment of the embodiment described above, the first control information block indicates whether each bit block carried by the first signal is correctly received.

As one sub-embodiment of the embodiment described above, the second signaling indicates the time domain resources and frequency domain resources occupied by the first signal.

As one sub-embodiment of the embodiment described above, the second signaling comprises a first field and a second field, where the first field of the second signaling indicates the time domain resources occupied by the first signal, and the second field of the second signaling indicates the frequency domain resources occupied by the first signal.

As one sub-embodiment of the embodiment described above, the second signaling comprises a first field and a second field, where the first field of the second signaling indicates the symbols occupied by the first signal, and the second field of the second signaling indicates the RBs occupied by the first signal.

As one embodiment, one bit block set comprises at least one bit block, and a bit block comprises at least one bit.

As one embodiment, the first RE set and the second RE set are orthogonal.

As one embodiment, the first RE set and the second RE set do not comprise the same REs.

As one embodiment, the first RE set and the second RE set comprise at least one identical RE.

As one embodiment, the first RE set and the second RE set comprise at least one identical symbol in the time domain.

As one embodiment, the first RE set and the second RE set comprise at least one identical subcarrier in the frequency domain.

As one embodiment, the first RE set and the second RE set are orthogonal in the frequency domain.

As one embodiment, the first RE set and the second RE set overlap in the frequency domain.

As one embodiment, the first RE set and the second RE set do not comprise one identical subcarrier in the frequency domain.

## Embodiment 6

Embodiment 6 exemplifies a schematic diagram of a first target integer according to one embodiment of the present application; as shown in FIG. 6.

In Embodiment 6, the first target integer is the number of coded modulation symbols per layer for the transmission of the first bit block in the target RE subset, where the first target integer is not greater than the first integer and is not greater than the second integer.

As one embodiment, the first target integer is equal to the first integer.

As one embodiment, the first target integer is equal to or less than the first integer.

As one embodiment, the first target integer is equal to the second integer.

As one embodiment, the first target integer is equal to or less than the second integer.

Typically, the number of coded modulation symbols per layer for the transmission of the first bit block in the target RE subset is equal to the number of REs occupied by the transmission of the first bit block in the target RE subset.

## Embodiment 7

Embodiment 7 exemplifies a schematic diagram of a first target integer according to another embodiment of the present application; as shown in FIG. 7.

In Embodiment 7, the first target integer is the number of coded modulation symbols per layer for the transmission of the first bit block in the target RE subset, where the first target integer is equal to the smaller of the first integer and the second integer.

As one embodiment, the first integer is not greater than the second integer, and the first target integer is equal to the first integer.

As one embodiment, the first integer is greater than the second integer, and the first target integer is equal to the second integer.

## Embodiment 8

Embodiment 8 exemplifies a schematic diagram of a first target integer according to another embodiment of the present application; as shown in FIG. 8.

In Embodiment 8, the first target integer is the number of coded modulation symbols per layer for the transmission of the first bit block in the target RE subset; the number of REs comprised in a first reference RE group within the first RE set is used to determine a third integer, and the first target integer is not greater than the third integer; the first reference RE group comprises all REs that satisfy a second condition under the assumption that the first RE set is used for PUSCH transmission, wherein the second condition comprises not belonging to the symbols in the first RE set where DMRS is located, and not being occupied by PTRS.

As one embodiment, the second condition further comprises: the symbols being no earlier than the first symbol that does not carry DMRS after the first DMRS symbol in the first RE set.

As one embodiment, the second condition comprises: not belonging to the symbols in the first RE set where DMRS is located and not being occupied by PTRS, with the symbols being no earlier than the first symbol that does not carry DMRS after the first DMRS symbol in the first RE set.

As one embodiment, the third integer is equal to the number of REs comprised in the first reference RE group of the first RE set.

As one embodiment, the third integer is the smallest positive integer that is not less than the product of the third coefficient and the number of REs comprised in the first reference RE group of the first RE set.

As one embodiment, the third integer is equal to the number of REs comprised in the first reference RE group of the first RE set, minus the number of coded modulation symbols per layer for the transmission of the second bit block in the target RE subset.

As one embodiment, the fifth integer is the smallest positive integer that is not less than the product of the third coefficient and the number of REs comprised in the first reference RE group of the first RE set, and the third integer is equal to the fifth integer minus the number of coded modulation symbols per layer for the transmission of the second bit block in the target RE subset.

As one embodiment, the third coefficient is a non-negative real number.

As one embodiment, the third coefficient is a positive real number.

As one embodiment, the third coefficient is a non-negative real number not greater than 1.

As one embodiment, the third coefficient is a non-negative real number less than 1.

As one embodiment, the third coefficient is a positive real number not greater than 1.

As one embodiment, the third coefficient is a positive real number less than 1.

As one embodiment, the third coefficient is configured by a higher layer parameter.

As one embodiment, the third coefficient is configured by an RRC parameter.

As one embodiment, the third coefficient is configured by the RRC parameter "scaling".

As one embodiment, the second bit block in the present application is also used to indicate the third coefficient.

As one embodiment, the first signaling is used to indicate the third coefficient.

As one embodiment, the third coefficient is $\alpha$.

As one embodiment, the specific definition of $\alpha$ can be found in Section 6.3.2.4 of 3GPP TS38.212.

## Embodiment 9

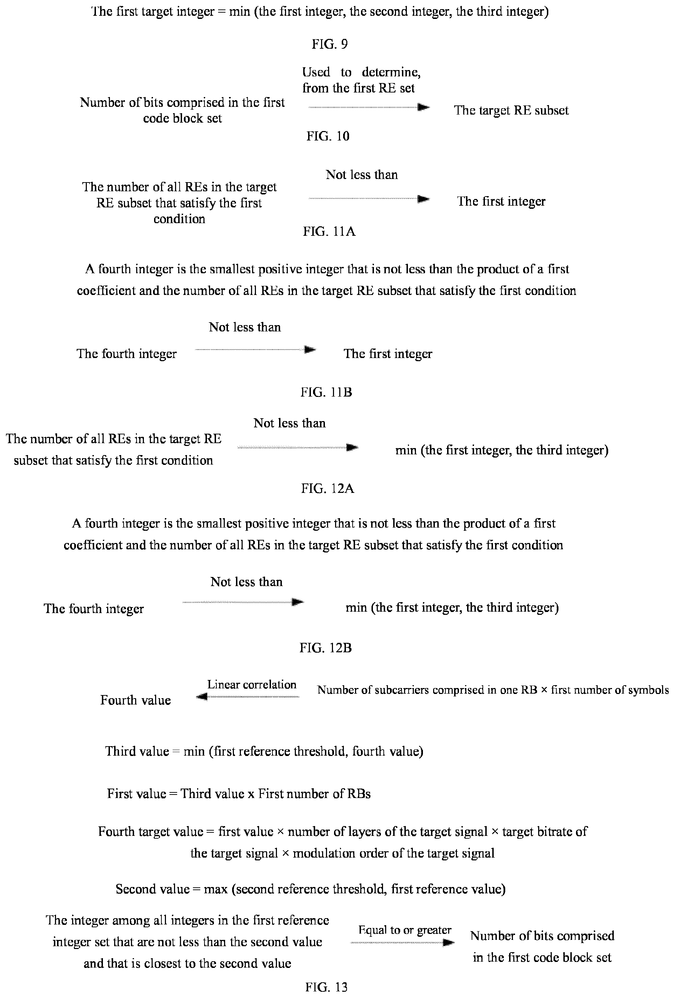

Embodiment 9 exemplifies a schematic diagram of a first target integer according to another embodiment of the present application; as shown in FIG. 9.

In Embodiment 9, the number of REs comprised in the first reference RE group in the first RE set is used to determine the third integer; the first reference RE group comprises all REs that satisfy a second condition under the assumption that the first RE set is used for PUSCH transmission, wherein the second condition comprises not belonging to the symbols in the first RE set where DMRS is located, and not being occupied by PTRS. The first target integer is equal to the smallest of the first integer, the second integer, and the third integer.

As one embodiment, the first integer is not greater than the second integer and the third integer, and the first target integer is equal to the first integer.

As one embodiment, the second integer is not greater than the first integer and the third integer, and the first target integer is equal to the second integer.

As one embodiment, the third integer is not greater than the first integer and the second integer, and the first target integer is equal to the third integer.

## Embodiment 10

Embodiment 10 exemplifies a schematic diagram of a target RE subset according to one embodiment of the present application; as shown in FIG. 10.

In Embodiment 10, the number of bits comprised in the first CB set is used to determine the target RE subset from the first RE set.

As one embodiment, the number of bits comprised in the first CB set is used to determine the second target integer, the number of REs comprised in the target RE subset is equal to the second target integer, and the second target integer is equal to the product of the first number of symbols, the first number of RBs, and the number of subcarriers comprised in one RB.

As one embodiment, the number of bits comprised in the first CB set is used to determine the second target integer, the number of REs comprised in the target RE subset is not less than the second target integer, and the second target integer is equal to the product of the first number of symbols, the first number of RBs, and the number of subcarriers comprised in one RB.

As one embodiment, the number of bits comprised in the first CB set is used to determine the second target integer, the number of REs comprised in the target RE subset is equal to or is greater than the second target integer, and the second target integer is equal to the product of the first number of symbols, the first number of RBs, and the number of subcarriers comprised in one RB.

As one embodiment, the target RE subset comprises the minimum number of REs in the first RE set required for transmitting the first CB set.

As one embodiment, the first number of symbols is equal to the number of symbols comprised in the first RE set in the time domain.

As one embodiment, the first number of symbols is less than or equal to the number of symbols comprised in the first RE set in the time domain.

As one embodiment, the first number of RBs is equal to the number of RBs comprised in the first RE set in the frequency domain.

As one embodiment, the first number of RBs is less than or equal to the number of RBs comprised in the first RE set in the frequency domain.

As one embodiment, the number of symbols comprised in the target RE subset in the time domain is equal to the first number of symbols.

As one embodiment, the number of symbols comprised in the target RE subset in the time domain is greater than or equal to the first number of symbols.

As one embodiment, the number of RBs comprised in the target RE subset in the frequency domain is equal to the first number of RBs.

As one embodiment, the number of RBs comprised in the target RE subset in the frequency domain is greater than or equal to the first number of RBs.

As one embodiment, the target RE subset and the first RE set occupy the same symbols in the time domain, and the target RE subset occupies part of all the RBs occupied by the first RE set in the frequency domain.

As one embodiment, the first RE set and the target RE subset occupy the same RBs in the frequency domain, and the target RE subset occupies part of all the symbols occupied by the first RE set in the time domain.

As one embodiment, the target RE subset occupies part of all the RBs occupied by the first RE set in the frequency domain, and part of all the symbols occupied by the first RE set in the time domain.

Typically, the number of subcarriers comprised in one RB is 12.

Typically, the number of subcarriers comprised in one RB is a positive integer greater than 1.

As one embodiment, the first value is the product of the third value and the first number of RBs; the third value is the smaller of the fourth value and the first reference threshold; the fourth value is linearly related to the first number of symbols, and the linear coefficient between the fourth value and the first number of symbols is equal to the number of subcarriers comprised in one RB; the target signal is the signal sent in the target RE subset; the target value is the product of the first value, the number of layers of the target signal, the target bitrate of the target signal, and the modulation order of the target signal; the target value is not less than the number of bits comprised in the first CB set.

As one embodiment, the first value is the product of the fourth value and the first number of RBs; the fourth value is linearly related to the first number of symbols, and the linear coefficient between the fourth value and the first number of symbols is equal to the number of subcarriers comprised in one RB; the target signal is the signal sent in the target RE subset; the target value is the product of the first value, the number of layers of the target signal, the target bitrate of the target signal, and the modulation order of the target signal; the target value is not less than the number of bits comprised in the first CB set.

As one embodiment, the first value is the product of the fourth value and the first number of RBs; the fourth value is equal to the product of the first number of symbols and the number of subcarriers comprised in one RB; the target signal is the signal sent in the target RE subset; the target value is the product of the first value, the number of layers of the target signal, the target bitrate of the target signal, and the modulation order of the target signal; the target value is not less than the number of bits comprised in the first CB set.

## Embodiment 11

Embodiments 11A and 11B respectively exemplify a schematic diagram of a target RE subset according to another embodiment of the present application; as shown in FIGS. 11A - 11B.

In Embodiment 11A, the number of all REs in the target RE subset that satisfy the first condition is not less than the first integer.

In Embodiment 11B, a fourth integer is the smallest positive integer that is not less than the product of a first coefficient and the number of all REs in the target RE subset that satisfy the first condition, and the fourth integer is not less than the first integer.

As one embodiment, a sixth integer is equal to the number of all REs in the target RE subset that satisfy the first condition, minus the number of coded modulation symbols per layer used for the transmission of the second bit block in the target RE subset, and the sixth integer is not less than the first integer.

As one embodiment, the fourth integer is the smallest positive integer that is not less than the product of the first coefficient and the number of all REs in the target RE subset that satisfy the first condition; the sixth integer is equal to the fourth integer minus the number of coded modulation symbols per layer used for the transmission of the second bit block in the target RE subset, and the sixth integer is not less than the first integer.

As one embodiment, the number of all REs in the target RE subset that satisfy the first condition is equal to the first integer.

As one embodiment, the number of all REs in the target RE subset that satisfy the first condition is equal to or greater than the first integer.

As one embodiment, the fourth integer is equal to the first integer.

As one embodiment, the fourth integer is equal to or greater than the first integer.

As one embodiment, the number of bits comprised in the first control information block is used to determine the target RE subset.

As one embodiment, the target RE subset depends on the number of bits comprised in the first control information block.

As one embodiment, the number of REs comprised in the first reference RE group in the first RE set is not less than the first integer.

As one embodiment, a fifth integer is the smallest positive integer that is not less than the product of the third coefficient and the number of REs comprised in the first reference RE group of the first RE set, and the fifth integer is not less than the first integer.

As one embodiment, the first target integer is equal to the first integer.

As one embodiment, the first target integer is not less than the first integer.

As one embodiment, the first integer is the minimum number of REs required to transmit all the bits in the first control information block in the first RE set.

As one embodiment, the first integer is the minimum number of REs required to transmit at least all the bits in the first control information block in the first RE set.

As one embodiment, the first integer is the minimum number of REs required to transmit all the bits in the first control information block and the second bit block in the first RE set.

As one embodiment, the CG UCI is transmitted in the target RE subset, and the first integer is the minimum number of REs required to transmit all the bits in the first control information block and the CG UCI in the first RE set.

As one embodiment, the determination of the target RE subset depends at least on the number of bits comprised in the first CB set and the number of bits comprised in the first control information block.

## Embodiment 12

Embodiments 12A and 12B respectively exemplify a schematic diagram of a target RE subset according to another embodiment of the present application; as shown in FIGS. 12A - 12B.

In Embodiment 12A, the number of all REs in the target RE subset that satisfy the first condition is not less than the smaller of the first integer and the third integer.

In Embodiment 12B, the fourth integer is the smallest positive integer that is not less than the product of a first coefficient and the number of all REs in the target RE subset that satisfy the first condition, and the fourth integer is not less than the smaller of the first integer and the third integer.

As one embodiment, the sixth integer is equal to the number of all REs in the target RE subset that satisfy the first condition, minus the number of coded modulation symbols per layer used for the transmission of the second bit block in the target RE subset, and the sixth integer is not less than the smaller of the first integer and the third integer.

As one embodiment, the fourth integer is the smallest positive integer that is not less than the product of the first coefficient and the number of all REs in the target RE subset that satisfy the first condition; the sixth integer is equal to the fourth integer minus the number of coded modulation symbols per layer used for the transmission of the second bit block in the target RE subset, and the sixth integer is not less than the smaller of the first integer and the third integer.

As one embodiment, the number of all REs in the target RE subset that satisfy the first condition is equal to the smaller of the first integer and the third integer.

As one embodiment, the number of all REs in the target RE subset that satisfy the first condition is equal to or greater than the smaller of the first integer and the third integer.

As one embodiment, the fourth integer is equal to the smaller of the first integer and the third integer.

As one embodiment, the fourth integer is equal to or greater than the smaller of the first integer and the third integer.

### Embodiment 13

Embodiment 13 exemplifies a schematic diagram of the first number of symbols and the first number of RBs according to one embodiment of the present application; as shown in FIG. 13.

In Embodiment 13, the first value is the product of the third value and the first number of RBs; the third value is the smaller of the fourth value and the first reference threshold; the fourth value is linearly related to the first number of symbols, and the linear coefficient between the fourth value and the first number of symbols is equal to the number of subcarriers comprised in one RB; the target signal is the signal sent in the target RE subset; the fourth target value is the product of the first value, the number of layers of the target signal, the target bitrate of the target signal, and the modulation order of the target signal; the second value is the larger of the second reference threshold and the first reference value, and the fourth target value is used to determine the third parameter; the second reference value is equal to the fourth target value divided by the third parameter, and the first reference value is equal to the third parameter multiplied by the largest integer not exceeding the second reference value, where the third parameter is a positive integer; the integer among all integers in the first reference integer set that are not less than the second value and that is closest to the second value is equal to or greater than the number of bits comprised in the first CB set; the first reference integer set comprises a plurality of positive integers.

As one embodiment, the integer among all integers in the first reference integer set that are not less than the second value and that is closest to the second value is equal to the number of bits comprised in the first code block set.

As one embodiment, the integer among all integers in the first reference integer set that are not less than the second value and that is closest to the second value is greater than the number of bits comprised in the first code block set.

As one embodiment, the fourth value is also linearly related to the first load parameter, where the linear coefficient between the fourth value and the first load parameter is -1, and the first load parameter is a non-negative integer.

As one embodiment, the first load parameter is configured by a higher layer parameter.

As one embodiment, the first load parameter is configured by the RRC parameter xOverhead.

As one embodiment, the first load parameter is

As one embodiment, the first load parameter is $N_{oh}^{PRB}$ .

As one embodiment, the specific definition of $N_{oh}^{PRB}$ can be found in Section 5.1.3.2 or Section 6.1.4.2 of 3GPP TS38.214.

As one embodiment, the fourth value is also linearly related to the second load parameter, where the linear coefficient between the fourth value and the second load parameter is -1, and the second load parameter is a positive integer.

As one embodiment, the second load parameter is the number of DMRS REs in each RB of the target RE subset.

As one embodiment, the second load parameter is the number of DMRS REs in each RB of the first RE set.

As one embodiment, the second load parameter is the number of DMRS REs in each RB.

As one embodiment, the second load parameter is the number of DMRS REs in each RB of the target RE subset, including the overhead of DMRS CDM (Code Division Multiplexing) groups without data.

As one embodiment, the second load parameter is the number of DMRS REs in each RB of the first RE set, including the overhead of DMRS CDM groups without data.

As one embodiment, the second load parameter is the number of DMRS REs in each RB, including the overhead of DMRS CDM groups without data.

As one embodiment, the second load parameter is $N_{DMRS}^{PRB}$, and the specific definition of $N_{DMRS}^{PRB}$ can be found in Section 5.1.3.2 or Section 6.1.4.2 of 3GPP TS38.214.

As one embodiment, the first value is $N_{RE}$, and the specific definition of $N_{RE}$ can be found in Section 5.1.3.2 of 3GPP TS38.214.

As one embodiment, the first value is $N_{RE}$, and the specific definition of $N_{RE}$ can be found in Section 6.1.4.2 of 3GPP TS38.214.

As one embodiment, the first number of RBs is $n_{PRB}$.

As one embodiment, the specific definition of $n_{PRB}$ can be found in Section 5.1.3.2 of 3GPP TS38.214.

As one embodiment, the first number of RBs is $n_{PRB}$.

As one embodiment, the specific definition of $n_{PRB}$ can be found in Section 6.1.4.2 of 3GPP TS38.214.

As one embodiment, the fourth value is $N_{RE}'$.

As one embodiment, the specific definition of $N_{RE}'$ can be found in Section 5.1.3.2 of 3GPP TS38.214.

As one embodiment, the fourth value is $N_{RE}'$.

As one embodiment, the specific definition of $N_{RE}'$ can be found in Section 6.1.4.2 of 3GPP TS38.214.

As one embodiment, the first reference threshold is equal to 156.

As one embodiment, the number of subcarriers comprised in one RB is equal to 12.

As one embodiment, the fourth target value is $N_{info}$.

As one embodiment, the specific definition of $N_{info}$ can be found in Section 5.1.3.2 or Section 6.1.4.2 of 3GPP TS38.214.

As one embodiment, the second value is $N_{info}'$.

As one embodiment, the specific definition of $N_{info}'$ can be found in Section 5.1.3.2 or Section 6.1.4.2 of 3GPP TS38.214.

As one embodiment, the fourth target value is not greater than 3,824.

As one embodiment, the second reference threshold is equal to 24.

As one embodiment, the third parameter is equal to $2^{\max\left(3,\lfloor log_2(\text{fourth target value})\rfloor-6\right)}$.

As one embodiment, the second value is equal to $\max\left(24, \text{third parameter} \cdot \left\lfloor \dfrac{\text{fourth target value}}{\text{third parameter}} \right\rfloor \right)$.

As one embodiment, any integer in the first reference integer set is a candidate TBS (Transport Block Size).

As one embodiment, the first reference integer set comprises all TBS values from Table 5.1.3.2-1 in 3GPP TS38.214 (V15.3.0).

## Embodiment 14

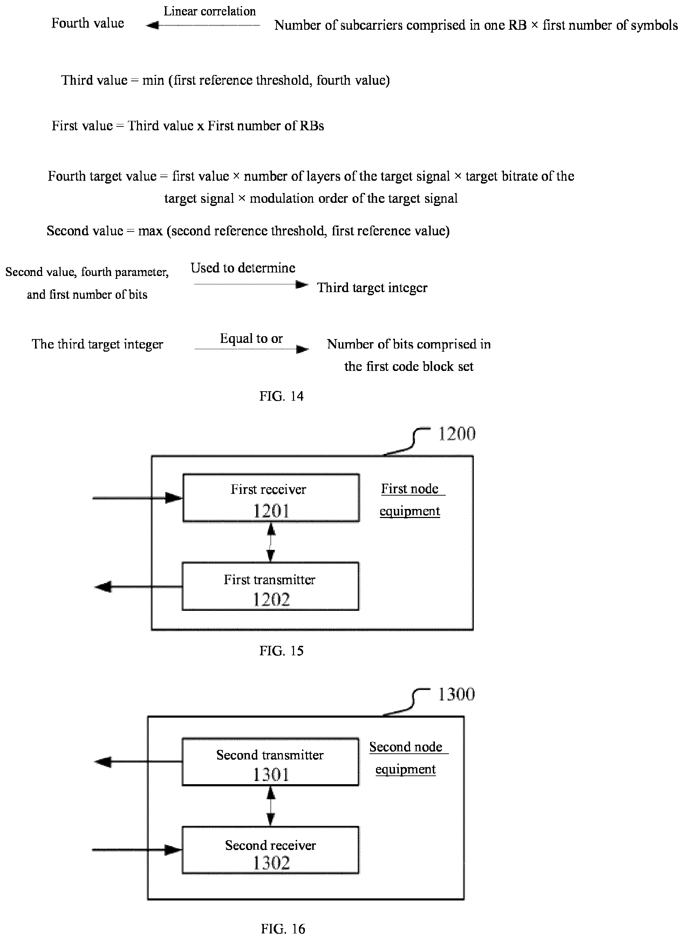

Embodiment 14 exemplifies a schematic diagram of the first number of symbols and the first number of RBs according to another embodiment of the present application; as shown in FIG. 14.

In Embodiment 14, the first value is the product of the third value and the first number of RBs; the third value is the smaller of the fourth value and the first reference threshold; the fourth value is linearly related to the first number of symbols, and the linear coefficient between the fourth value and the first number of symbols is equal to the number of subcarriers comprised in one RB; the target signal is the signal sent in the target RE subset; the fourth target value is the product of the first value, the number of layers of the target signal, the target bitrate of the target signal, and the modulation order of the target signal; the second value is the larger of the second reference threshold and the first reference value, and the fifth target value is equal to the fourth target value minus the reference number of bits, where the reference number of bits is a positive integer. The fifth target value is used to determine a third parameter; the second reference value is equal to the fifth target value divided by the third parameter, and the first reference value is equal to the third parameter multiplied by the integer closest to the second reference value, where the third parameter is a positive integer; the second value is used to determine a fourth parameter, the third target integer is equal to $\text{fourth parameter} \times \left\lceil \dfrac{\text{second value+first number of bits}}{\text{fourth parameter}} \right\rceil - \text{first number of bits}$, the fourth parameter is an integer, and the first number of bits is an integer; the third target integer is greater than or equal to the number of bits comprised in the first CB set.

As one embodiment, the third target integer is equal to the number of bits comprised in the first CB set.

As one embodiment, the third target integer is greater than the number of bits comprised in the first CB set.

As one embodiment, the fourth value is also linearly related to the first load parameter, where the linear coefficient between the fourth value and the first load parameter is -1, and the first load parameter is a non-negative integer.

As one embodiment, the fourth value is also linearly related to the second load parameter, where the linear coefficient between the fourth value and the second load parameter is -1, and the second load parameter is a positive integer.

As one embodiment, the first value is $N_{RE}$, and the specific definition of $N_{RE}$ can be found in Section 5.1.3.2 of 3GPP TS38.214.

As one embodiment, the first value is $N_{RE}$, and the specific definition of $N_{RE}$ can be found in Section 6.1.4.2 of 3GPP TS38.214.

As one embodiment, the first number of RBs is $n_{PRB}$, and the specific definition of $n_{PRB}$ can be found in Section 5.1.3.2 of 3GPP TS38.214.

As one embodiment, the first number of RBs is $n_{PRB}$, and the specific definition of $n_{PRB}$ can be found in Section 6.1.4.2 of 3GPP TS38.214.

As one embodiment, the fourth value is $N'_{RE}$, and the specific definition of $N'_{RE}$ can be found in Section 5.1.3.2 of 3GPP TS38.214.

As one embodiment, the fourth value is $N'_{RE}$, and the specific definition of $N'_{RE}$ can be found in Section 6.1.4.2 of 3GPP TS38.214.

As one embodiment, the first reference threshold is equal to 156.

As one embodiment, the number of subcarriers comprised in one RB is equal to 12.

As one embodiment, the fourth value is $N_{info}$, and the specific definition of $N_{info}$ can be found in Section 5.1.3.2 or Section 6.1.4.2 of 3GPP TS38.214.

As one embodiment, the second value is $N'_{info}$, and the specific definition of $N'_{info}$ can be found in Section 5.1.3.2 or Section 6.1.4.2 of 3GPP TS38.214.

As one embodiment, the fourth target value is greater than 3,824.

As one embodiment, the first number of bits is one of {6, 11, 16, 24}.

As one embodiment, the first number of bits is 24.

As one embodiment, the target bitrate of the target signal is not greater than 1/4, and the fourth parameter is

$$8 \cdot \left\lceil \frac{\text{second value} + \text{first number of bits}}{3816} \right\rceil.$$

As one embodiment, the target bitrate of the target signal is greater than 1/4, the second value is greater than 8,424, and the fourth parameter is

$$8 \cdot \left\lceil \frac{\text{second value} + \text{first number of bits}}{8424} \right\rceil.$$

As one embodiment, the target bitrate of the target signal is greater than 1/4, the second value is not greater than 8,424, and the fourth parameter is equal to 8.

As one embodiment, the second reference threshold is equal to 3,840.

As one embodiment, the first reference number of bits is equal to the first number of bits.

As one embodiment, the first reference number of bits is one of {6, 11, 16, 24}.

As one embodiment, the reference number of bits is 24.

As one embodiment, the third parameter is equal to $2^{(\lfloor log_2(\text{fifth target value}) \rfloor - 5)}$.

As one embodiment, the second value is equal to $\max\left(3840, \text{third parameter} \cdot \text{round}\left(\frac{\text{fifth target value}}{\text{third parameter}}\right)\right)$.

## Embodiment 15

Embodiment 15 exemplifies a structural block diagram of a processing apparatus in a first node equipment according to one embodiment of the present application; as shown in FIG. 15. In FIG. 15, a processing apparatus 1200 in the first node equipment comprises a first receiver 1201 and a first transmitter 1202.

As one embodiment, the first node equipment is a user equipment.

As one embodiment, the first node equipment is a relay node equipment.

As one embodiment, the first receiver 1201 comprises at least one of {the antenna 452, the receiver 454, the receiving processor 456, the multi-antenna receiving processor 458, the controller/processor 459, the memory 460, the data source 467} in Embodiment 4.

As one embodiment, the first transmitter 1202 comprises at least one of {the antenna 452, the transmitter 454, the transmitting processor 468, the multi-antenna transmitting processor 457, the controller/processor 459, the memory 460, the data source 467} in Embodiment 4.

The first receiver 1201 receives first signaling, and the first signaling is used to indicate a first RE set.

The first transmitter 1202 sends a first CB set and a first bit block in only a target RE subset within the first RE set.

In Embodiment 15, the first RE set is reserved for the first CB set, and the number of bits comprised in the first CB set is used to determine the target RE subset from the first RE set; the first control information block comprises the first bit block, and the number of bits comprised in the first control information block and the number of bits comprised in the first CB set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first CB set comprises at least one CB, the first control information block comprises at least one bit, and the first bit block comprises at least one bit.

As one embodiment, the number of REs comprised in a first reference RE group within the first RE set is used to determine a third integer, and the first target integer is not greater than the third integer; the first reference RE group comprises all REs that satisfy a second condition under the assumption that the first RE set is used for PUSCH transmission, wherein the second condition comprises not belonging to the symbols in the first RE set where DMRS is located, and not being occupied by PTRS.

As one embodiment, the first target integer is equal to the smallest of the first integer, the second integer, and the third integer.

As one embodiment, the number of all REs in the target RE subset that satisfy the first condition is not less than the first integer; alternatively, a fourth integer is the smallest positive integer that is not less than the product of a first coefficient and the number of all REs in the target RE subset that satisfy the first condition, and the fourth integer is not less than the first integer.

As one embodiment, the number of all REs in the target RE subset that satisfy the first condition is not less than the smaller of the first integer and the third integer; alternatively, a fourth integer is the smallest positive integer that is not less than the product of a first coefficient and the number of all REs in the target RE subset that satisfy the first condition, and the fourth integer is not less than the smaller of the first integer and the third integer.

As one embodiment, the first transmitter 1202 further transmits a second bit block in the target RE subset; wherein the second bit block is used to indicate at least one of the symbols occupied by the target RE subset or the RBs occupied by the target RE subset.

As one embodiment, the first receiver 1201 receives second signaling; wherein the second signaling is used to indicate a second RE set, with the second RE set being reserved for the first control information block, and the first RE set and the second RE set overlapping in the time domain.

## Embodiment 16

Embodiment 16 exemplifies a structural block diagram of a processing apparatus in a second node equipment according to one embodiment of the present application; as shown in FIG. 16. In FIG. 16, a processing apparatus 1300 in the second node equipment comprises a second transmitter 1301 and a second receiver 1302.

As one embodiment, the second node equipment is a base station equipment.

As one embodiment, the second node device is a relay node device.

As one embodiment, the second transmitter 1301 comprises at least one of {the antenna 420, the transmitter 418, the transmitting processor 416, the multi-antenna transmitting processor 471, the controller/processor 475, the memory 476} in Embodiment 4.

As one embodiment, the second receiver 1302 comprises at least one of {the antenna 420, the receiver 418, the receiving processor 470, the multi-antenna receiving processor 472, the controller/processor 475, the memory 476} in Embodiment 4.

The second transmitter 1301 sends first signaling and the first signaling is used to indicate a first RE set;

The second receiver 1302 receives a first CB set and a first bit block in only the target RE subset within the first RE set;

In Embodiment 16, the first RE set is reserved for the first CB set, and the number of bits comprised in the first CB set is used to determine the target RE subset from the first RE set; the first control information block comprises the first bit block, and the number of bits comprised in the first control information block and the number of bits comprised in the first CB set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first CB set comprises at least one CB, the first control information block comprises at least one bit, and the first bit block comprises at least one bit.

As one embodiment, the number of REs comprised in a first reference RE group within the first RE set is used to determine a third integer, and the first target integer is not greater than the third integer; the first reference RE group comprises all REs that satisfy a second condition under the assumption that the first RE set is used for PUSCH transmission, wherein the second condition comprises not belonging to the symbols in the first RE set where DMRS is located, and not being occupied by PTRS.

As one embodiment, the first target integer is equal to the smallest of the first integer, the second integer, and the third integer.

As one embodiment, the number of all REs in the target RE subset that satisfy the first condition is not less than the first integer; alternatively, a fourth integer is the smallest positive integer that is not less than the product of a first coefficient and the number of all REs in the target RE subset that satisfy the first condition, and the fourth integer is not less than the first integer.

As one embodiment, the number of all REs in the target RE subset that satisfy the first condition is not less than the smaller of the first integer and the third integer; alternatively, a fourth integer is the smallest positive integer that is not less than the product of a first coefficient and the number of all REs in the target RE subset that satisfy the first condition, and the fourth integer is not less than the smaller of the first integer and the third integer.

As one embodiment, the second receiver 1302 further receives a second bit block in the target RE subset; wherein the second bit block is used to indicate at least one of the symbols occupied by the target RE subset or the RBs occupied by the target RE subset.

As one embodiment, the second transmitter 1301 sends second signaling; wherein the second signaling is used to indicate a second RE set, with the second RE set being reserved for the first control information block, and the first RE set and the second RE set overlapping in the time domain.

Those of ordinary skill in the art may understand that all or part of the steps in the methods described above may be accomplished by instructing relevant hardware through a program that can be stored in computer-readable storage media, such as read only memory, hard disk, or optical disk. Optionally, the steps of the embodiments described above, in whole or in part, may also be implemented using one or more integrated circuits. Accordingly, the various module units in the embodiments described above may be implemented in the form of hardware or in the form of software function modules. The present application is not limited to the combination of software and hardware of any particular form. The user equipment, terminals, and UEs in the present application include but are not limited to unmanned aerial vehicles, communication modules on unmanned aerial vehicles, remote-controlled aircraft, aircraft, small aircraft, mobile phones, tablets, notebooks, in-vehicle communication equipment, wireless sensors, network cards, IoT terminals, RFID terminals, NB-IoT terminals, MTC (Machine Type Communication) terminals, eMTC (enhanced MTC) terminals, data cards, network cards, in-vehicle communication equipment, low-cost mobile phones, low-cost tablets, and other wireless communication equipment. The base stations or system equipment in the present application include, but are not limited to, macrocell base stations, microcell base stations, femtocell base stations, relay base stations, gNB NR node B, TRP (Transmitter Receiver Point), and other wireless communication equipment.

The foregoing is merely a preferred embodiment of the present application and is not intended to limit the protective scope of the present application. Any changes and modifications made based on the embodiments described in the specification shall be deemed to be apparent and within the protective scope of the present disclosure if similar partial or all technical effects are achieved.

**Claims**

1. A first node equipment for wireless communication, **characterized in that**, the equipment comprises:

    a first receiver receiving first signaling, where the first signaling is used to indicate the first RE set;
    a first transmitter sending a first code block set and a first bit block in only a target RE subset within the first RE set;
    wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

2. The first node equipment according to Claim 1, **characterized in that**, the number of REs comprised in a first reference RE group within the first RE set is used to determine a third integer, and the first target integer is not greater than the third integer; the first reference RE group comprises all REs that satisfy a second condition under the assumption that the first RE set is used for PUSCH transmission, wherein the second condition comprises not belonging to the symbols in the first RE set where DMRS is located, and not being occupied by PTRS.

3. The first node equipment according to Claim 2, **characterized in that**, the first target integer is equal to the smallest of the first integer, the second integer, and the third integer.

4. The first node equipment according to any one of Claims 1 to 3, **characterized in that**, the number of all REs in the target RE subset that satisfy the first condition is not less than the first integer; alternatively, a fourth integer is the smallest positive integer that is not less than the product of a first coefficient and the number of all REs in the target RE subset that satisfy the first condition, and the fourth integer is not less than the first integer.

5. The first node equipment according to Claims 2 or 3, **characterized in that**, the number of all REs in the target RE subset that satisfy the first condition is not less than the smaller of the first integer and the third integer; alternatively, a fourth integer is the smallest positive integer that is not less than the product of a first coefficient and the number of all REs in the target RE subset that satisfy the first condition, and the fourth integer is not less than the smaller of the first integer and the third integer.

6. The first node equipment according to any one of Claims 1 to 5, **characterized in that**, the equipment comprises:

   the first transmitter further sending a second bit block in the target RE subset;
   wherein the second bit block is used to indicate at least one of the symbols occupied by the target RE subset or the RBs occupied by the target RE subset.

7. The first node equipment according to any one of Claims 1 to 6, **characterized in that**, the equipment comprises:

   the first receiver receiving second signaling;
   wherein the second signaling is used to indicate a second RE set, with the second RE set being reserved for the first control information block, and the first RE set and the second RE set overlapping in the time domain.

8. A second node equipment for wireless communication, **characterized in that**, the equipment comprises:

   a second transmitter sending first signaling, where the first signaling is used to indicate a first RE set;
   a second receiver receiving a first code block set and a first bit block in only a target RE subset within the first RE set;
   wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

9. A method used in a first node for wireless communication, **characterized in that**, the method comprises:

   receiving first signaling, where the first signaling is used to indicate a first RE set;
   sending a first code block set and a first bit block in only a target RE subset within the first RE set;
   wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

10. A method used in a second node for wireless communication, **characterized in that**, the method comprises:

sending first signaling, where the first signaling is used to indicate a first RE set;
receiving a first code block set and a first bit block in only a target RE subset within the first RE set; wherein the first RE set is reserved for the first code block set, and the number of bits comprised in the first code block set is used to determine the target RE subset from the first RE set; a first control information block comprises the first bit block, and the number of bits comprised in the first control information block and the number of bits comprised in the first code block set are jointly used to determine a first integer; the number of all REs in the target RE subset that satisfy the first condition is used to determine a second integer, wherein the first condition comprises not belonging to the symbols in the target RE subset where DMRS is located, and not being occupied by PTRS; the first target integer is the number of coded modulation symbols per layer used for transmitting the first bit block in the target RE subset, and the first target integer is not greater than the first integer and not greater than the second integer; the first code block set comprises at least one code block, the first control information block comprises at least one bit, and the first bit block comprises at least one bit.

100

First node

101

Receives first signaling

102

Sends a first code block set and a first
bit block in only a target RE subset
within the first RE set

FIG. 1

5GS/EPS 200

220

HSS/UDM

NG-RAN
202

201

UE

203

NR node B

211

MME/AMF/
SMF

214

Other
MME/AMF/
SMF

241

UE

204

Other NR
node B

212

S-GW/UPF

213

P-GW/UPF

230

Internet
service

5GC/EPC
210

FIG. 2

Control plane
300

L3

306

RRC

305

304

PDCP

L2

303

RLC

302

MAC

L1

301

PHY

User plane
350

356

SDAP

355

L2

354

PDCP

353

RLC

352

MAC

L1

351

PHY

FIG. 3

410

416

Transmitting
processor

471

Multi-antenna
transmitting
processor

418

Transmitter
Receiver

420

452

420

Transmitter
Receiver

454

457

Multi-antenna
transmitting
processor

450

468

Transmitting
processor

475

Controller
/processor

459

Controller
/processor

Memory

460

Memory

476

Data
source

467

470

Receiving
processor

472

Multi-antenna
receiving
processor

418

Transmitter
Receiver

420

452

452

Transmitter
Receiver

454

458

Multi-antenna
receiving
processor

456

Receiving
processor

FIG. 4

| N02. Second node | | U01. First node |
|---|---|---|

S5201.Sends second signaling

Second signaling

S5101.Receives second signaling

F1. Optional

S5202.Sends the first signaling

First signaling

S5102.Receives first signaling

S5103.Sends a first code block set and a first bit block in only a target RE subset within the first RE set

First code block set and first bit

S5203.Receives a first code block set and a first bit block in only a target RE subset within the first RE set

S5104.Further sends a second bit block in the target RE subset

Second bit block

S5204.Further receives a second bit block in the target RE subset

F2. Optional

End

End

FIG. 5

The first target integer is the number of coded modulation symbols per layer for the transmission of the first bit block in the target RE subset

The first target integer  — Not greater than →  The first integer

The first target integer  — Not greater than →  The second integer

FIG. 6

The first target integer is the number of coded modulation symbols per layer for the transmission of the first bit block in the target RE subset

The first target integer = min (the first integer, the second integer)

FIG. 7

The first target integer is the number of coded modulation symbols per layer for the transmission of the first bit block in the target RE subset

Number of REs comprised in the first reference RE group of the first RE set  — Used to determine →  Third integer

The first target integer  — Not greater than →  The third integer

The first reference RE group  — Including →  All REs that satisfy the second condition when the first RE set is assumed to be used for PUSCH transmission

The second condition  — Including →  Not belonging to the symbols in the first RE set where DMRS is located and not being occupied by PTRS

FIG. 8

The first target integer = min (the first integer, the second integer, the third integer)

FIG. 9

Number of bits comprised in the first code block set $\xrightarrow{\text{Used to determine, from the first RE set}}$ The target RE subset

FIG. 10

The number of all REs in the target RE subset that satisfy the first condition $\xrightarrow{\text{Not less than}}$ The first integer

FIG. 11A

A fourth integer is the smallest positive integer that is not less than the product of a first coefficient and the number of all REs in the target RE subset that satisfy the first condition

The fourth integer $\xrightarrow{\text{Not less than}}$ The first integer

FIG. 11B

The number of all REs in the target RE subset that satisfy the first condition $\xrightarrow{\text{Not less than}}$ min (the first integer, the third integer)

FIG. 12A

A fourth integer is the smallest positive integer that is not less than the product of a first coefficient and the number of all REs in the target RE subset that satisfy the first condition

The fourth integer $\xrightarrow{\text{Not less than}}$ min (the first integer, the third integer)

FIG. 12B

Fourth value $\xleftarrow{\text{Linear correlation}}$ Number of subcarriers comprised in one RB × first number of symbols

Third value = min (first reference threshold, fourth value)

First value = Third value x First number of RBs

Fourth target value = first value × number of layers of the target signal × target bitrate of the target signal × modulation order of the target signal

Second value = max (second reference threshold, first reference value)

The integer among all integers in the first reference integer set that are not less than the second value and that is closest to the second value $\xrightarrow{\text{Equal to or greater}}$ Number of bits comprised in the first code block set

FIG. 13

Fourth value ◄─── Linear correlation ─── Number of subcarriers comprised in one RB × first number of symbols

Third value = min (first reference threshold, fourth value)

First value = Third value x First number of RBs

Fourth target value = first value × number of layers of the target signal × target bitrate of the target signal × modulation order of the target signal

Second value = max (second reference threshold, first reference value)

Second value, fourth parameter, and first number of bits ─── Used to determine ──► Third target integer

The third target integer ─── Equal to or ──► Number of bits comprised in the first code block set

FIG. 14

1200

First receiver 1201

First node equipment

First transmitter 1202

FIG. 15

1300

Second transmitter 1301

Second node equipment

Second receiver 1302

FIG. 16

## INTERNATIONAL SEARCH REPORT

| International application No. |
| --- |
| **PCT/CN2023/116660** |

| **A.** | **CLASSIFICATION OF SUBJECT MATTER** |
| --- | --- |

H04L 5/00(2006.01)i

According to International Patent Classification (IPC) or to both national classification and IPC

| **B.** | **FIELDS SEARCHED** |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP: 信令, 资源元素, 资源粒子, 子集, 比特数, 整数, 数量, 个数, 码块, 比特块, 控制信息块, signal+, RE, resource element, number, amount, bit, code, block, UCI, DCI

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 112235751 A (SHANGHAI LANGBO COMMUNICATION TECHNOLOGY CO., LTD.) 15 January 2021 (2021-01-15) claims 1-10, and description, paragraphs 71-284 and 398-418 | 1-10 |
| A | CN 108462556 A (HUAWEI TECHNOLOGIES CO., LTD.) 28 August 2018 (2018-08-28) entire document | 1-10 |
| A | WO 2021023038 A1 (SHANGHAI LANGBIRCH COMMUNICATION TECHNOLOGY CO., LTD.) 11 February 2021 (2021-02-11) entire document | 1-10 |
| A | WO 2021083153 A1 (ZTE CORP.) 06 May 2021 (2021-05-06) entire document | 1-10 |
| A | CN 111447689 A (SHANGHAI LANGBO COMMUNICATION TECHNOLOGY CO., LTD.) 24 July 2020 (2020-07-24) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 November 2023** | **22 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/116660**

### C. DOCUMENTS CONSIDERED TO BE RELEVANT

| Category* | Citation of document, with indication, where appropriate, of the relevant passages | Relevant to claim No. |
|-----------|-----------------------------------------------------------------------------------|----------------------|
| A | HUAWEI et al. "draftCR: UCI and PTRS overhead for channel bits calculation in PUSCH FRC"<br>*3GPP TSG-RAN WG4 Meeting # 100e R4-2113756*, 27 August 2021 (2021-08-27), entire document | 1-10 |

## INTERNATIONAL SEARCH REPORT
### Information on patent family members

International application No.

**PCT/CN2023/116660**

| Patent document cited in search report | | | Publication date (day/month/year) | Patent family member(s) | | | Publication date (day/month/year) |
|---|---|---|---|---|---|---|---|
| CN | 112235751 | A | 15 January 2021 | WO | 2020042862 | A1 | 05 March 2020 |
| | | | | CN | 110876127 | A | 10 March 2020 |
| | | | | US | 2021160114 | A1 | 27 May 2021 |
| | | | | EP | 3846509 | A1 | 07 July 2021 |
| CN | 108462556 | A | 28 August 2018 | WO | 2018153307 | A1 | 30 August 2018 |
| | | | | EP | 3579481 | A1 | 11 December 2019 |
| | | | | US | 2019379511 | A1 | 12 December 2019 |
| | | | | IN | 201947034326 | A | 06 September 2019 |
| WO | 2021023038 | A1 | 11 February 2021 | CN | 112312350 | A | 02 February 2021 |
| WO | 2021083153 | A1 | 06 May 2021 | CN | 112752346 | A | 04 May 2021 |
| CN | 111447689 | A | 24 July 2020 | US | 2021135827 | A1 | 06 May 2021 |
| | | | | US | 2019013919 | A1 | 10 January 2019 |
| | | | | US | 2020287690 | A1 | 10 September 2020 |
| | | | | CN | 109219149 | A | 15 January 2019 |
| | | | | CN | 111447688 | A | 24 July 2010 |

Form PCT/ISA/210 (patent family annex) (July 2022)